# EUROPÄISCHE PATENTSCHRIFT

(11) **EP 2 754 230 B1**
(45) Veröffentlichungstag und Bekanntmachung des Hinweises auf die Patenterteilung: **11.08.2021**
(21) Anmeldenummer: 12753102.8
(22) Anmeldetag: 20.08.2012
(51) Int. Cl.: H02K 7/18, H02K 7/10, H02K 7/14, H02K 9/06

(54) **WECHSELSTROMGENERATOR FÜR EIN KRAFTFAHRZEUG**
ALTERNATING CURRENT GENERATOR FOR A MOTOR VEHICLE
ALTERNATEUR POUR UN VÉHICULE À MOTEUR

(30) Priorität: 09.09.2011 DE 102011082442
(43) Veröffentlichungstag der Anmeldung: 16.07.2014
(73) Patentinhaber: Deere & Company, Moline, IL 61265 (US)
(72) Erfinder: EVANS, Steven, 68519 Viernheim (DE)
(74) Vertreter: Dehnhardt, Florian Christopher
(86) Internationale Anmeldenummer: PCT/EP2012/066180
(87) Internationale Veröffentlichungsnummer: WO 2013/034425

(56) Entgegenhaltungen:
- EP-A1- 0 567 688
- DE-A1-102005 062 781
- FR-A1- 2 837 537
- JP-A- S5 594 558
- JP-A- 2001 055 995
- US-A1- 2003 184 244
- None

## Beschreibung

Die Erfindung betrifft ein Kraftfahrzeug mit einem Verbrennungsmotor, einem luftgekühlten Kühlerpaket zur Motorkühlung sowie einem Wechselstromgenerator umfassend eine Radiallüftereinheit mit einem Lüfterrad, wobei die Radiallüftereinheit zur Beaufschlagung des Kühlerpakets mit Kühlluft aus der Umgebung dient, wobei das Lüfterrad eine Vielzahl radialer Lüfterflügel aufweist, wobei im Endbereich zumindest zweier gegenüberliegender Lüfterflügel jeweils ein Magnetfelderzeuger derart angeordnet ist, dass bei einer Drehung des Lüfterrads in einer entlang eines Außenumfangs der Radiallüftereinheit angeordneten Magnetspulenanordnung ein Wechselstrom induziert wird.

Eine platzsparende Konfiguration in Gestalt eines Wechselstrommotors, der sich grundsätzlich auch zur Wechselstromerzeugung heranziehen lässt, ist beispielsweise aus der FR 2 837 537 A1 bekannt. Der Wechselstrommotor umfasst einen Lüfter mit radialen Lüfterflügeln, die an ihren äußeren Enden über einen umlaufenden Ring miteinander verbunden sind. Der Ring umfasst nebeneinander angeordnete Permanentmagneten, die einen Rotor des Wechselstromgenerators bilden. Ein den Ring umgebender Stator weist eine Vielzahl von Spulenwicklungen auf, in denen bei einer Drehung der Lüfterflügel und damit des Rings ein Strom induzierbar ist.

Des Weiteren zeigt die JPS 55 094 558 A einen über eine Riemenscheibe antreibbaren Lüfter mit radialen Lüfterflügeln, die an einer zentralen Antriebsscheibe angeordnet sind. Letztere umfasst eine Vielzahl umfangsmäßig angeordneter Permanentmagnete wechselnder Polarität, die bei Drehung der zentralen Antriebsscheibe einen Wechselstrom in einer umgebenden Spulenanordnung hervorrufen.

Es ist Aufgabe der vorliegenden Erfindung, eine platzsparende Lösung zur Wechselstromerzeugung für ein Kraftfahrzeug mit einem bezüglich seiner Effizienz verbesserten Wechselstromgenerator der eingangs genannten Art anzugeben.

Diese Aufgabe wird durch ein Kraftfahrzeug mit einem Verbrennungsmotor, einem luftgekühlten Kühlerpaket zur Motorkühlung sowie einem Wechselstromgenerator umfassend eine Radiallüftereinheit mit einem Lüfterrad mit den Merkmalen des Patentanspruchs 1 gelöst.

Das Kraftfahrzeug weist einen Verbrennungsmotor, ein luftgekühltes Kühlerpaket zur Motorkühlung sowie einen Wechselstromgenerator auf. Der Wechselstromgenerator umfasst eine Radiallüftereinheit mit einem Lüfterrad, wobei die Radiallüftereinheit zur Beaufschlagung des Kühlerpakets mit Kühlluft aus der Umgebung dient. Das Lüfterrad weist eine Vielzahl radialer Lüfterflügel auf, wobei im Endbereich zumindest zweier gegenüberliegender Lüfterflügel jeweils ein Magnetfelderzeuger derart angeordnet ist, dass bei einer Drehung des Lüfterrads in einer entlang eines Außenumfangs der Radiallüftereinheit angeordneten Magnetspulenanordnung ein Wechselstrom induziert wird. Der Wechselstromgenerator wird über einen Keilriemen sowie zugehörige Riemenscheiben seitens des im Kraftfahrzeug befindlichen Verbrennungsmotors angetrieben. Die Magnetspulenanordnung umfasst einen Weicheisenring mit einer Vielzahl radialer Schlitze und/oder Durchgangsöffnungen, wobei die Schlitze und/oder Durchgangsöffnungen zur Aufnahme von Spulenwindungen einander überlappend angeordneter Magnetspulen vorgesehen sind und der Magnetfelderzeuger entlang einer in dem Weicheisenring ausgebildeten Einbuchtung läuft. Die Erfindung macht sich den Umstand zunutze, dass die meisten Kraftfahrzeuge über ein luftgekühltes Kühlerpaket zur Motorkühlung verfügen, wobei eine Radiallüftereinheit zur Beaufschlagung des Kühlerpakets mit Kühlluft aus der Umgebung dient. Der erfindungsgemäße Wechselstromgenerator kann daher ohne zusätzlichen Platzbedarf in die meisten Kraftfahrzeuge implementiert werden. Insbesondere bietet sich dessen Verwendung als ungeregelter Zusatzgenerator in Ergänzung zu einer konventionellen Lichtmaschine an.

Genauer gesagt weist das Lüfterrad eine gerade Anzahl von Lüfterflügeln auf, wobei jeder der Lüfterflügel einen eigenen Magnetfelderzeuger trägt. Die magnetische Polarität benachbarter Magnetfelderzeuger ist derart gewählt, dass bei einer Drehung des Lüfterrads im Bereich der Magnetspulenanordnung ein magnetisches Wechselfeld erzeugt wird. Der Weicheisenring besteht hierbei aus einem vakuumgetränkten Stapel einzelner Weicheisenplatten oder Transformatorenbleche.

Typischerweise weist das Lüfterrad zwischen 6 und 12 Lüfterflügel auf. Die genaue Anzahl der Lüfterflügel richtet sich hierbei in erster Linie nach der gewünschten Luftfördermenge und damit Kühlleistung der Radiallüftereinheit.

Aufgrund des verhältnismäßig großen Durchmessers des Lüfterrads sowie der außenliegenden Anbringung der Magnetfelderzeuger im Endbereich der Lüfterflügel lassen sich dementsprechend hohe magnetische Flussdichten im Bereich der Magnetspulenanordnung erzielen. So ergibt sich bei einem in landwirtschaftlichen Traktoren gängigen Lüfterraddurchmesser von 550 mm sowie einem Drehzahlbereich von 1.200 bis 2.800 rpm eine Umfangsgeschwindigkeit in der Größenordnung von 4,5 bis 10,5 m/s.

Da der Magnetfelderzeuger entlang einer in dem Weicheisenring ausgebildeten Einbuchtung läuft, wird der Luftspalt zwischen Magnetfelderzeuger und Magnetspulenanordnung entsprechend gering gehalten.

Vorteilhafte Ausführungen des erfindungsgemäßen Wechselstromgenerators gehen aus den Unteransprüchen hervor.

Im Sinne einer möglichst kompakten Bauweise des Wechselstromgenerators kann die Magnetspulenanordnung baulich in eine Lüfterhutze der Radiallüftereinheit integriert sein. Die Lüfterhutze besteht beispielsweise aus faserverstärktem Polyamid oder einem ähnlichen Kunststoff und wird einstückig im Spritzgussverfahren hergestellt. Die Magnetspulenanordnung kann vor äußeren Einflüssen geschützt in die Kunststoffmasse der Lüfterhutze eingebettet sein.

Die Magnetspulen können derart angeordnet sein, dass ein 3-phasiger Wechselstrom bzw. Drehstrom erzeugt wird. In diesem Fall verlaufen die Spulenwindungen einer jeden Magnetspule jeweils im Abstand von drei Schlitzen bzw. Durchgangsöffnungen um den insofern als Spulenkörper ausgebildeten Weicheisenring. Die aus Kupferlackdraht gewickelten Magnetspulen sind einenends an einem gemeinsamen Sternpunkt angeschlossen und anderenends mit entsprechenden Abgriffen für die Bereitstellung des Drehstroms verbunden. Die Abgriffe können in Form von Flachsteckern oder Schraubklemmen an der Außenseite der Lüfterhutze angeordnet sein.

Ferner kann der Magnetfelderzeuger baulich in den Lüfterflügel integriert sein. Die Lüfterflügel sind beispielsweise aus faserverstärktem Polyamid oder einem ähnlichen

Kunststoff einstückig im Spritzgussverfahren hergestellt. Der Magnetfelderzeuger kann hierbei in einem im Endbereich des Lüfterflügels ausgeformten Gehäuse untergebracht sein. Das Gehäuse ist entweder unmittelbar an dem betreffenden Lüfterflügel oder aber an einem zwischen den Lüfterflügeln verlaufenden Stabilisierungsring ausgeformt.

Vorzugsweise ist der Magnetfelderzeuger als Permanentmagnet ausgebildet. Dieser kann zur Erzielung einer möglichst hohen magnetischen Flussdichte aus einer Neodym-Eisen-Bor-Verbindung bestehen.

Der erfindungsgemäße Wechselstromgenerator wird im Folgenden anhand der beigefügten Zeichnungen näher erläutert. Dabei sind hinsichtlich ihrer Funktion überein übereinstimmende bzw. vergleichbare Bauteile mit denselben Bezugszeichen gekennzeichnet. Es zeigen:
- Fig. 1: eine Frontansicht eines Ausführungsbeispiels des erfindungsgemäßen Wechselstromgenerators,
- Fig. 2: eine Seitenansicht des Wechselstromgenerators entlang der in Fig. 1 dargestellten Schnittlinie A-A, und
- Fig. 3: eine Detailansicht einer Magnetspulenanordnung sowie eines an einem Lüfterflügel angebrachten Magnetfelderzeugers des Wechselstromgenerators entlang der in Fig. 2 dargestellten Schnittlinie B-B.

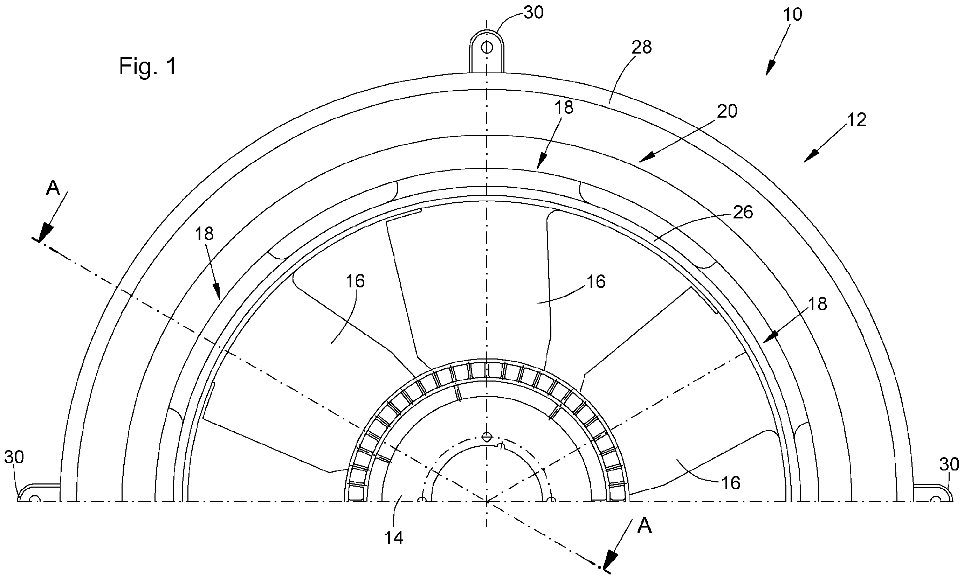

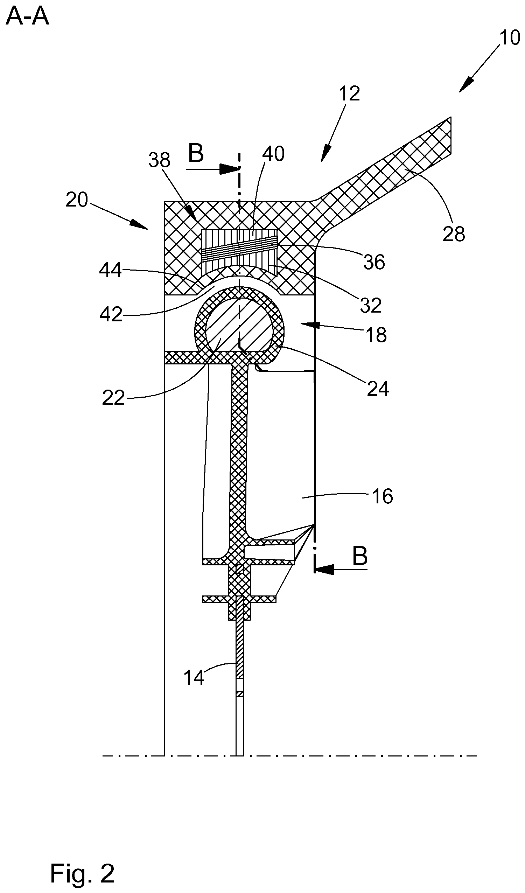

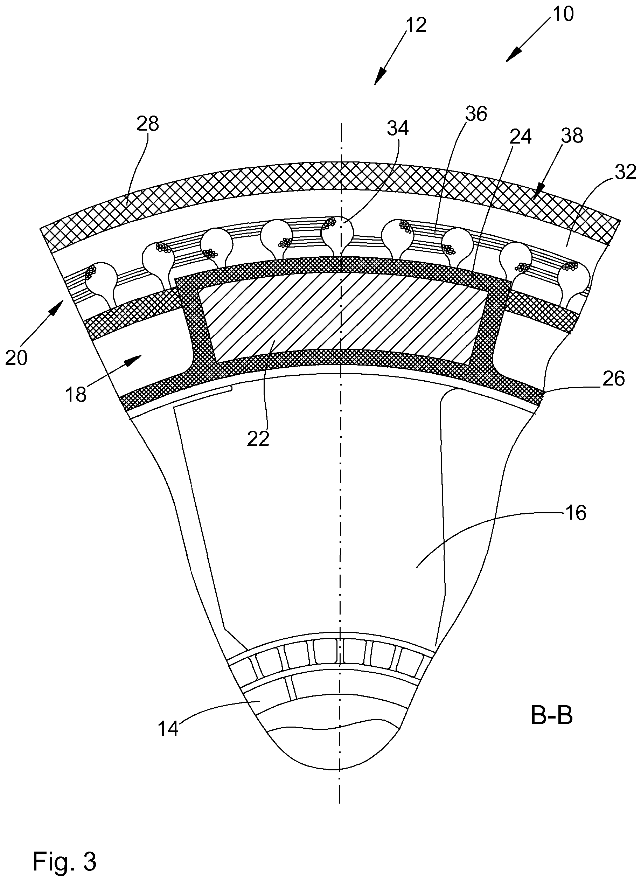

Fig. 1 zeigt eine Frontansicht eines Ausführungsbeispiels des erfindungsgemäßen Wechselstromgenerators für ein nicht dargestelltes Kraftfahrzeug. Der Übersichtlichkeit halber ist der Wechselstromgenerator lediglich zur Hälfte wiedergegeben. Weitere Einzelheiten lassen sich den beiden Schnittdarstellungen gemäß Fig. 2 und 3 entnehmen.

Der Wechselstromgenerator 10 umfasst eine Radiallüftereinheit 12 mit einem Lüfterrad 14, das eine Vielzahl radialer Lüfterflügel 16 aufweist, wobei im Endbereich gegenüberliegender Lüfterflügel 16 jeweils ein Magnetfelderzeuger 18 angeordnet ist. Diese induzieren in einer entlang eines Außenumfangs der Radiallüftereinheit 12 angeordneten Magnetspulenanordnung 20 einen Wechselstrom, sobald das Lüfterrad 14 in Drehung versetzt wird. Hierzu wird der erfindungsgemäße Wechselstromgenerator 10 über einen Keilriemen sowie zugehörige Riemenscheiben seitens eines im Kraftfahrzeug befindlichen Verbrennungsmotors angetrieben.

Beispielsgemäß weist das Lüfterrad 14 eine Anzahl von 6 gleichmäßig verteilt angeordneten Lüfterflügeln 16 auf, wobei jeder der Lüfterflügel 16 einen eigenen Magnetfelderzeuger 18 trägt. Die magnetische Polarität benachbarter Magnetfelderzeuger 18 ist derart gewählt, dass bei einer Drehung des Lüfterrads 14 im Bereich der Magnetspulenanordnung 20 ein magnetisches Wechselfeld erzeugt wird.

Im vorliegenden Fall sind die Magnetfelderzeuger 18 als Permanentmagnete 22 ausgebildet, wobei in Drehrichtung des Lüfterrads 14 Nordpole mit Südpolen abwechseln. Die Permanentmagnete 22 bestehen zur Erzielung einer möglichst hohen magnetischen Flussdichte aus einer Neodym-Eisen-Bor-Verbindung.

Wie sich der Schnittdarstellung des Wechselstromgenerators 10 in Fig. 2 entnehmen lässt, sind die Magnetfelderzeuger 18 baulich in die Lüfterflügel 16 integriert. Die Magnetfelderzeuger 18 sind jeweils in einem im Endbereich des Lüfterflügels 16 ausgeformten Gehäuse 24 untergebracht. Das Gehäuse 24 ist entweder unmittelbar an dem betreffenden Lüfterflügel 16 oder aber, wie im vorliegenden Fall, an einem zwischen den Lüfterflügeln 16 verlaufenden Stabilisierungsring 26 ausgeformt. Entgegen der Darstellung in Fig. 1 können die Magnetfelderzeuger 18 gegenüber den Lüfterflügeln 16 auch winkelversetzt entlang des Stabilisierungsrings 26 angeordnet sein.

Ferner ist die Magnetspulenanordnung 20 baulich in eine Lüfterhutze 28 der Radiallüftereinheit 12 integriert. Die Lüfterhutze 28 besteht, wie auch die Lüfterflügel 16, aus faserverstärktem Polyamid oder einem ähnlichen Kunststoff und wird einstückig im Spritzgussverfahren hergestellt. Die Magnetspulenanordnung 20 ist vor äußeren Einflüssen geschützt in die Kunststoffmasse der Lüfterhutze 28 eingebettet. Mehrere am Umfang der Lüfterhutze 28 ausgeformte Befestigungsaugen 30 dienen der Anbringung des Wechselstromgenerators 10 im Kraftfahrzeug.

Nähere Einzelheiten der Magnetspulenanordnung 20 ergeben sich aus der Schnittdarstellung des Wechselstromgenerators 10 in Fig. 3. Demgemäß umfasst die Magnetspulenanordnung 20 einen Weicheisenring 32 mit einer Vielzahl radialer Schlitze bzw. Durchgangsöffnungen 34, wobei die Schlitze bzw. Durchgangsöffnungen 34 zur Aufnahme von Spulenwindungen 36 einander überlappend angeordneter Magnetspulen 38 vorgesehen sind.

Die Magnetspulen 38 sind derart angeordnet, dass bei einer Drehung des Lüfterrads 14 ein 3-phasiger Wechselstrom bzw. Drehstrom erzeugt wird. Hierzu verlaufen die Spulenwindungen 36 einer jeden Magnetspule 38 jeweils im Abstand von drei Schlitzen bzw. Durchgangsöffnungen 34 um den insofern als Spulenkörper ausgebildeten Weicheisenring 32. Die aus Kupferlackdraht gewickelten Magnetspulen 38 sind einenends an einem gemeinsamen Sternpunkt angeschlossen und anderenends mit entsprechenden Abgriffen für die Bereitstellung des Drehstroms verbunden. Die Abgriffe können in Form von Flachsteckern oder Schraubklemmen an der Außenseite der Lüfterhutze 28 angeordnet sein.

Der Weicheisenring 32 besteht gemäß Fig. 2 aus einem vakuumgetränkten Stapel einzelner Weicheisenplatten oder Transformatorenbleche 40. Um den Luftspalt 42 zwischen Magnetfelderzeuger 18 und Magnetspulenanordnung 20 so gering wie möglich zu halten, läuft der Magnetfelderzeuger 18 entlang einer in dem Weicheisenring 32 ausgebildeten Einbuchtung 44. Die Einbuchtung 44 weist einen mit der Außenkontur des Magnetfelderzeugers 18 korrespondierenden Verlauf auf. Abweichend von der Darstellung in Fig. 2 kann die Einbuchtung 44 auch derart ausgeformt sein, dass diese eine Tasche bildet, innerhalb derer die Magnetfelderzeuger 18 entlanglaufen.

## Patentansprüche

1. Kraftfahrzeug mit einem Verbrennungsmotor, einem luftgekühlten Kühlerpaket zur Motorkühlung sowie einem Wechselstromgenerator umfassend eine Radiallüftereinheit (12) mit einem Lüfterrad (14), wobei die Radiallüftereinheit (12) zur Beaufschlagung des Kühlerpakets mit Kühlluft aus der Umgebung dient, wobei das Lüfterrad (14) eine Vielzahl radialer Lüfterflügel (16) aufweist, wobei im Endbereich zumindest zweier gegenüberliegender Lüfterflügel (16) jeweils ein Magnetfelderzeuger (18) derart angeordnet ist, dass bei einer Drehung des Lüfterrads (14) in einer entlang eines Außenumfangs der Radiallüftereinheit (12) angeordneten Magnetspulenanordnung (20) ein Wechselstrom induziert wird, **dadurch gekennzeichnet, dass** der Wechselstromgenerator über einen Keilriemen sowie zugehörige Riemenscheiben seitens des im Kraftfahrzeug befindlichen Verbrennungsmotors angetrieben wird, und dass die Magnetspulenanordnung (20) einen Weicheisenring (32) mit einer Vielzahl radialer Schlitze und/oder Durchgangsöffnungen (34) umfasst, wobei die Schlitze und/oder Durchgangsöffnungen (34) zur Aufnahme von Spulenwindungen (36) einander überlappend angeordneter Magnetspulen (38) vorgesehen sind und der Magnetfelderzeuger (18) entlang einer in dem Weicheisenring (32) ausgebildeten Einbuchtung (44) läuft.

2. Kraftfahrzeug nach Anspruch 1, **dadurch gekennzeichnet, dass** die Magnetspulenanordnung (20) baulich in eine Lüfterhutze (28) der Radiallüftereinheit (12) integriert ist.

3. Kraftfahrzeug nach Anspruch 1 oder 2, **dadurch gekennzeichnet, dass** die Magnetspulen (38) derart angeordnet sind, dass ein 3-phasiger Wechselstrom erzeugt wird.

4. Kraftfahrzeug nach einem der Ansprüche 1 bis 3, **dadurch gekennzeichnet, dass** der Magnetfelderzeuger (18) baulich in den Lüfterflügel (16) integriert ist.

5. Kraftfahrzeug nach einem der Ansprüche 1 bis 4, **dadurch gekennzeichnet, dass** der Magnetfelderzeuger (18) als Permanentmagnet (22) ausgebildet ist.

## Claims

1. Motor vehicle having an internal combustion engine, having an air-cooled radiator assembly for cooling the engine and having an alternating current generator comprising a radial fan unit (12) with a fan impeller (14),
wherein the radial fan unit (12) serves to supply cooling air from the surrounding area to the radiator assembly, wherein the fan impeller (14) has a multiplicity of radial fan blades (16), wherein a respective magnetic field generator (18) is arranged in the end region of at least two opposite fan blades (16) in such a way that an alternating current is induced in the event of rotation of the fan impeller (14) in a magnet coil arrangement (20) arranged along an outer periphery of the radial fan unit (12), **characterized in that** the alternating current generator is driven by means of a V-belt and associated belt pulleys on the part of the internal combustion engine located in the motor vehicle, and **in that** the magnet coil arrangement (20) comprises a soft-iron ring (32) with a multiplicity of radial slots and/or passage openings (34), wherein the slots and/or passage openings (34) are provided for receiving coil turns (36) of magnet coils (38) arranged in a mutually overlapping manner and the magnetic field generator (18) runs along a recess (44) formed in the soft-iron ring (32).

2. Motor vehicle according to Claim 1, **characterized in that** the magnet coil arrangement (20) is structurally integrated into a fan scoop (28) of the radial fan unit (12) .

3. Motor vehicle according to Claim 1 or 2, **characterized in that** the magnet coils (38) are arranged in such a way that a three-phase alternating current is generated.

4. Motor vehicle according to one of Claims 1 to 3, **characterized in that** the magnetic field generator (18) is structurally integrated into the fan blade (16).

5. Motor vehicle according to one of Claims 1 to 4, characterized the magnetic field generator (18) is designed as a permanent magnet (22).

## Revendications

1. Véhicule automobile comprenant un moteur à combustion interne, un ensemble refroidisseur refroidi par air destiné au refroidissement du moteur et un alternateur comprenant une unité formant ventilateur radial (12) pourvue d'une roue de ventilateur (14), l'unité formant ventilateur radial (12) étant utilisée pour soumettre l'ensemble refroidisseur à de l'air de refroidissement provenant de l'environnement, la roue de ventilateur (14) comportant une pluralité de pales de ventilateur radiales (16), un générateur de champ magnétique (18) étant disposé dans la zone d'extrémité d'au moins deux pales de ventilateur opposées (16) de telle sorte que, lorsque la roue de ventilateur (14) tourne, un courant alternatif soit induit dans un ensemble de bobines magnétiques (20) disposé le long d'une circonférence extérieure de l'unité formant ventilateur radial (12), **caractérisé en ce que** l'alternateur est entraîné par une courroie trapézoïdale et des poulies associées du côté du moteur à combustion interne situées dans le véhicule automobile, et **en ce que** l'ensemble de bobines magnétiques (20) comprend une bague en fer doux (32) pourvue d'une multitude de fentes radiales et/ou d'ouvertures traversantes (34), les fentes et/ou les ouvertures traversantes (34) étant prévues pour recevoir des enroulements (36) de bobines magnétiques (38) disposées à chevauchement et l'alternateur (18) s'étendant le long d'une indentation (44) formée dans la bague en fer doux (32).

2. Véhicule automobile selon la revendication 1, **caractérisé en ce que** l'ensemble de bobines magnétiques (20) est structurellement intégré dans un capot de ventilateur (28) de l'unité formant ventilateur radial (12) .

3. Véhicule automobile selon la revendication 1 ou 2, **caractérisé en ce que** les bobines magnétiques (38) sont disposées de façon à générer un courant alternatif triphasé.

4. Véhicule automobile selon l'une des revendications 1 à 3, **caractérisé en ce que** l'alternateur (18) est structurellement intégré dans la pale de ventilateur (16) .

5. Véhicule automobile selon l'une des revendications 1 à 4, **caractérisé en ce que** l'alternateur (18) est réalisé sous la forme d'aimant permanent (22).
